# DEMANDE DE BREVET EUROPEEN

(11) **EP 2 500 274 A1**
(43) Date de publication de la demande: **19.09.2012**
(21) Numéro de dépôt: 12157923.9
(22) Date de dépôt: 02.03.2012
(51) Int. Cl.: B64G 1/22, B64G 1/40

(54) **Structure plane escamotable, et satellite comprenant une telle structure**

(30) Priorité: 17.03.2011 FR 1100808
(71) Demandeur: Thales, 92200 Neuilly Sur Seine (FR)
(72) Inventeur: Krawczyk, Rodolphe, 06270 VILLENEUVE-LOUBET (FR)
(74) Mandataire: Brunelli, Gérald

(57) **Abrégé**

Structure plane escamotable (SPE), comprenant une membrane dépliable (MD) liée à N ensembles principaux (EP1, EP2, ..., EPK, ... , EPN) de n tiges principales (EPK_TP1, EPK_TP2, ..., EPK_TPn) reliées bout-à-bout par n-1 articulations (EPK_A1, EPK_A2, ..., EPK_An-1) munies respectivement d'un moyen de déploiement, et au moins un ensemble intermédiaire (EI1, E12, ..., EIK, ... , EIN) de n tiges intermédiaires (EIK_TI1, EIK_TI2, ..., EIK_TIn), moins volumineuses que lesdites tiges principales, reliées bout-à-bout par n-1 articulations (EIK_A1, EIK_A2, ..., EIK_An-1).

## Description

La présente invention porte sur une structure plane escamotable, et satellite comprenant une telle structure.

Il est de plus en plus question de déployer de grandes structures planes, notamment dans l'espace, telles les voiles solaires, ou de grands pare-soleil.

Déployer une structure plane de grande dimension dans l'espace est extrêmement contraignant, et implique des contraintes au lancement, car un lancement spatial induit des conditions de compacité au lancement d'autant plus draconiennes que la surface de sa membrane une fois déployée est importante.

L'invention trouve une application privilégiée dans le domaine spatial. En effet, lorsqu'il a une configuration escamotée ou repliée, son encombrement réduit est particulièrement adapté aux contraintes de compacité imposées lors du lancement. Au contraire, sa configuration active ou déployée lui permet d'être opérationnel lorsque le satellite est opérationnel dans l'espace.

Il est connu, dans le domaine spatial, des structure escamotables de type pare-soleil, muni d'ensembles de tiges reliées bout-à-bout par des articulations.

De telles structures, ne sont pas adaptées à une membrane de grande taille pour un nombre de tiges au moins égal à deux, car un minimum de tension est requis pour ces membranes : pour éviter tout risque de déchirement lors du déploiement du satellite, les éléments de membrane doivent présenter du mou, i.e. leur surface une fois tendue doit être supérieure à leur surface une fois déployée, mais ce mou doit être récupéré au moins en partie pour des applications voile solaire et surtout pare-soleil.

Un but de l'invention est de proposer une structure plane escamotable, présentant un risque de déchirement limité de la membrane, lors du déploiement du satellite.

Il est proposé, selon un aspect de l'invention, une structure plane escamotable, comprenant une membrane dépliable liée à N ensembles principaux de n tiges principales reliées bout-à-bout par n-1 articulations munies respectivement d'un moyen de déploiement, et au moins un ensemble intermédiaire de n tiges intermédiaires, moins volumineuses que lesdites tiges principales, reliées bout-à-bout par n-1 articulations.

Une telle structure limite les risques de déchirement de la membrane lors de son déploiement, tout en assurant une tension suffisante des éléments de membrane en fin de déploiement.

Dans un mode de réalisation, lesdites tiges intermédiaires sont plus légères que lesdites tiges principales.

Les tiges intermédiaires sont très simples à mettre en oeuvre du fait de leur légèreté.

Selon un mode de réalisation lesdites articulations reliant lesdites tiges intermédiaires d'un ensemble intermédiaire sont respectivement munies d'un moyen de déploiement.

Ainsi, ces tiges intermédiaires peuvent également aider au déploiement des tiges principales en cas de point dur rencontré pendant le déploiement de certaines articulations principales.

Dans un mode de réalisation, au moins une partie desdits moyens de déploiement sont passifs, par exemple comprenant un ressort de torsion ou un joint de Carpentier.

L'utilisation de moyens de déploiement passifs est financièrement plus intéressante et techniquement plus simple que celle de moyens actifs de type moteurs électriques, et suffisante dans la mesure où ce type de déploiement est le plus souvent monocoup et non suivi de repliement, les applications visées pour ce type de structure déployable ne nécessitant qu'une structure déployée une fois pour toutes.

En variante ou en combinaison, au moins une partie desdits moyens de déploiement comprend un actionneur, ou, en d'autres termes, un organe commandé qui convertit l'énergie qui lui est fournie en un travail utile à l'exécution de tâches d'un système automatisé, en l'espèce un déploiement des deux tiges reliées par l'articulation munie d'un actionneur.

Par exemple, N peut être supérieur ou égal à 3.

Il est également proposé, selon un autre aspect de l'invention, un satellite comprenant une structure telle que précédemment décrite, montée fixement sur un élément de support dudit satellite, en base d'au moins une partie desdits ensembles de tiges, par l'intermédiaire d'articulations munies de moyens de déploiement, tels des ressorts de torsion ou des joints de Carpentier.

Un tel satellite peut ainsi être muni d'une structure plane escamotable, de grande surface une fois déployée, limitant sensiblement les risques de déchirement de la membrane lors de son déploiement, et permettant une compacité compatible avec les lanceurs actuels.

Dans un mode de réalisation, un ensemble de tiges de ladite structure, lorsque celle-ci est repliée ou escamotée, est sensiblement perpendiculaire à la surface dudit élément de support.

Ainsi, la compacité est optimisée pour un lancement.

L'invention sera mieux comprise à l'étude de quelques modes de réalisation décrits à titre d'exemples nullement limitatifs et illustrés par les dessins annexés sur lesquels :
- la figure 1 illustre schématiquement un exemple de structure plane escamotable selon un aspect de l'invention ; et
- les figures 2a, 2b, 2c et 2d, illustrent schématiquement, en vue de coupe, le déploiement d'une structure plane escamotable selon la figure 1, appartenant à un satellite.

Sur l'ensemble de figures, les éléments ayant les mêmes références sont similaires.

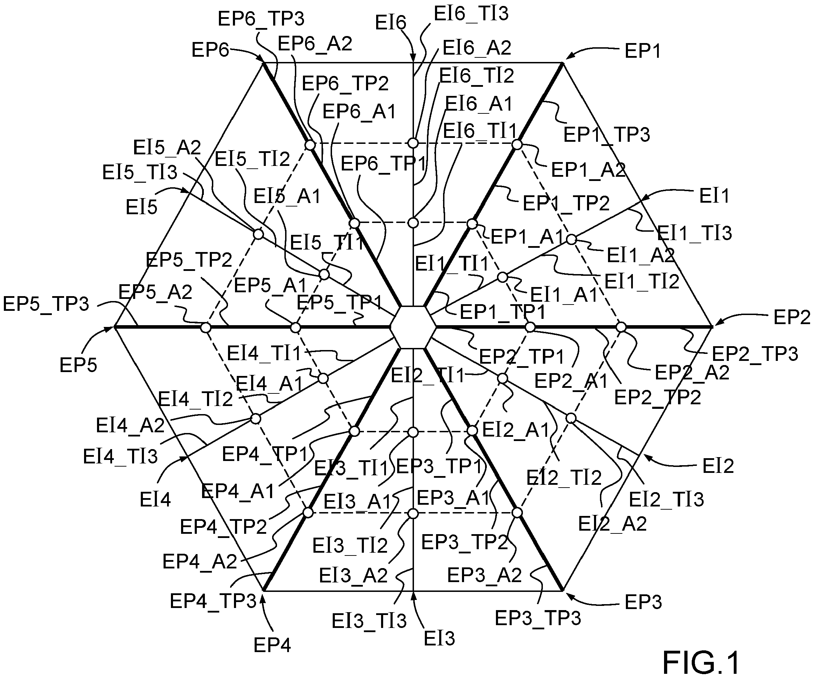

La figure 1 représente schématiquement un exemple de structure plane escamotable SPE comprenant une membrane dépliable MD, par exemple, du mylar, du kapton, ou du tissu de carbone, liée à N ensembles principaux EP1, EP2, ..., EPK, ... , EPN de n tiges principales EPK_TP1, EPK_TP2, ..., EPK_TPn reliées bout-à-bout par n-1 articulations EPK_A1, EPK_A2, ..., EPK_An-1 munies respectivement d'un élément de déploiement. La structure plane escamotable SPE comprend également au moins un ensemble intermédiaire EI1, EI2, ..., EIK, ... , EIN de n tiges intermédiaires EIK_TI1, EIK_TI2, ..., EIK_TIn, moins volumineuses que les tiges principales, reliées bout-à-bout par n-1 articulations EIK_A1, EIK_A2, ..., EIK_An-1.

Dans l'exemple de la figure 1, le nombre N d'ensembles principaux EPK est pris égal à 6 (EP1, EP2, EP3, EP4, EP5, et EP6), le nombre d'ensembles intermédiaires EIK est pris égal à 6 (EI1, E12, E13, E14, EP5, et EI6), et le nombre n de tiges par ensemble principal EPK et ensemble intermédiaire EIK est pris égal à 3.

Les tiges intermédiaires EIK_TI1, EIK_TI2, ..., EIK_TIn sont plus légères que les tiges principales EK_TP1, EK_TP2, ..., EK_TPn. Ainsi, sans risque de déchirement de la membrane dépliable MD, à masse et coût réduits, une tension suffisante est donnée à MD.

En l'occurrence, les articulations EIK_A1, EIK_A2, ..., EIK_An-1 reliant les tiges intermédiaires EIK_TI1, EIK-TI2, ..., EIK_TIn d'un ensemble intermédiaire EI1, E12, ..., EIK, ... , EIN sont respectivement munies d'un élément de déploiement.

Au moins une partie des moyens de déploiement peuvent être passifs, par exemple, comprendre des ressorts de torsion ou des joints de Carpentier. L'utilisation d'éléments passifs ne nécessite pas de force fournie par un élément extérieur pour provoquer le déploiement des tiges qu'ils relient. Les moyens de régulation du mouvement sont du type classique déjà utilisés sur des générateurs solaires (régulateur centrifuge, éventuellement moteur-frein pour un ensemble de tiges, voire pour l'ensemble de toutes les tiges) et ne sont pas abordés dans la présente demande de brevet. Si un ou plusieurs repliements étaient considérés nécessaires, les ressorts de torsion ou joints de Carpentier devraient alors être remplacés par des moteurs électriques.

En variante, ou en combinaison, au moins une partie des éléments de déploiement peuvent comprendre un actionneur. Un tel mode de réalisation n'est pas illustré sur les figures.

Pour les grandes structures, N peut être supérieur ou égal à 3.

Ce type de structure est parfaitement adaptée pour être montée fixement sur un élément de support SUP dudit satellite, en base d'au moins une partie des ensembles EPK, EIK de tiges, par l'intermédiaire d'articulations EPK_A0, EIK_A0 munies de moyens de déploiement, sur un élément de support SUP du satellite.

Lorsque la structure SPE du satellite est repliée, pendant un lancement, un ensemble E1, E2, ..., EK, ... , EN, EI1, E12, ..., EIK, ... , ou EIN de tiges de la structure SPE est sensiblement perpendiculaire à la surface de l'élément de support SUP.

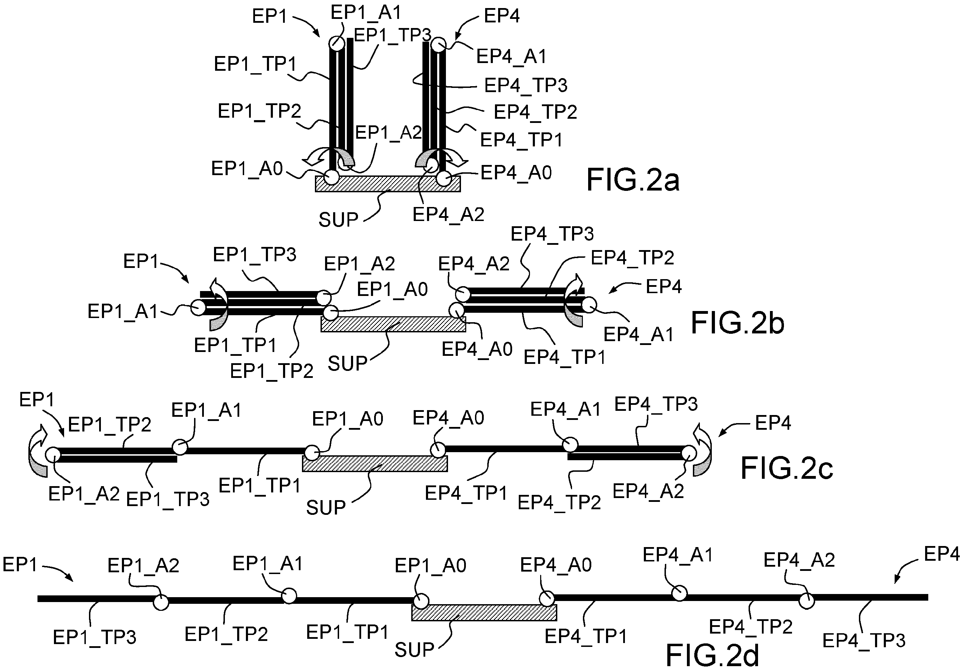

Sur les figures 2a, 2b, 2c et 2d, est schématisé, en vue de coupe, le déploiement d'une structure plane escamotable SPE montée sur la surface d'un élément de support SUP d'un satellite. Dans l'exemple décrit, il s'agit d'une structure SPE selon la figure 1 (N=6 et n=3).

Initialement, lors du lancement, la structure plane escamotable SPE, est repliée sur elle-même. Sur la figure 2a, en coupe, sont, par exemple, représentés deux ensembles principaux EP1 et EP4, diamétralement opposés.

Chacun de ces ensembles principaux comprend ses trois tiges principales EPK_TP1, EPK_TP2, et EPK_TP3 repliées en accordéon, par l'intermédiaire de leurs articulations EPK_A1 et EPK_A2, et sont montés en rotation sur le support SUP, par l'intermédiaire de leur articulation EPK_A0.

Une fois mis en orbite, le déploiement de la structure plane s'effectue, comme illustré sur les figures 2a, 2b, 2c et 2d. Tout d'abord, les ensembles repliés en accordéon s'écartent, en effectuant une rotation sensiblement de 90° atour de leur articulation fixée au support SUP, de manière à déployer une première couronne de la membrane dépliable MD. La structure SPE se retrouve alors, en vue de coupe, dans l'état de la figure 2b.

Ensuite, une rotation de 180° est effectuée par les deuxièmes et troisièmes tiges EPK_TP2 et EPK_TP3 des ensembles EPK, vers l'extérieur, autour de leur articulation EPK_A1 de manière à déployer une deuxième couronne de la membrane dépliable MD. La structure SPE se retrouve alors, en vue de coupe, dans l'état de la figure 2c.

Enfin, une rotation de 180°est effectuée par les troisièmes tiges EPK_TP3 des ensembles EPK, vers l'extérieur, autour de leur articulation EPK_A2 de manière à déployer une troisième couronne de la membrane dépliable MD. La structure SPE se retrouve alors, en vue de coupe, dans l'état de la figure 2d, complètement déployée.

Bien entendu, durant ce déploiement, les ensembles intermédiaires se déploient de manière similaires. Les ensembles de tiges ne sont pas forcément tous liés, en base, au support SUP, aussi tous ne comprennent pas forcément une articulation montée en rotation sur le support SUP.

Toutes les articulations peuvent se déployer par des moyens de déploiement passifs tels des ressorts de torsion ou des joints de Carpentier et/ou des moyens actifs de déploiement tels des actionneurs.

## Revendications

1. Structure plane escamotable (SPE), comprenant une membrane dépliable (MD) liée à N ensembles principaux (EP1, EP2, ..., EPK, ... , EPN) de n tiges principales (EPK_TP1, EPK_TP2, ..., EPK_TPn) reliées bout-à-bout par n-1 articulations (EPK_A1, EPK_A2, ..., EPK_An-1) munies respectivement d'un moyen de déploiement, et au moins un ensemble intermédiaire (EI1, E12, ..., EIK, ... , EIN) de n tiges intermédiaires (EIK_TI1, EIK-TI2, ..., EIK-TIn), moins volumineuses que lesdites tiges principales, reliées bout-à-bout par n-1 articulations (EIK_A1, EIK_A2, ..., EIK_An-1).

2. Structure plane escamotable (SPE) selon la revendication 1, dans laquelle lesdites tiges intermédiaires (EIK_TI1, EIK_TI2, ..., EIK_TIn) sont plus légères que lesdites tiges principales (EPK_TP1, EPK_TP2, ..., EPK_TPn).

3. Structure plane escamotable (SPE) selon l'une des revendications précédentes, dans laquelle lesdites articulations (EIK_A1, EIK_A2, ..., EIK_An-1) reliant lesdites tiges intermédiaires (EIK_TI1, EIK_TI2, ..., EIK_TIn) d'un ensemble intermédiaire (EI1, E12, ..., EIK, ... , EIN) sont respectivement munies d'un moyen de déploiement.

4. Structure plane escamotable (SPE) selon l'une des revendications précédentes, dans laquelle, au moins une partie desdits moyens de déploiement sont passifs.

5. Structure plane escamotable (SPE) selon la revendication 4, dans laquelle un moyen de déploiement passif comprend un ressort de torsion ou un joint de Carpentier.

6. Structure plane escamotable (SPE) selon l'une des revendications précédentes, dans laquelle, au moins une partie desdits moyens de déploiement comprend un actionneur.

7. Structure plane escamotable (SPE) selon l'une des revendications précédentes, dans laquelle N est supérieur ou égal à 3.

8. Satellite comprenant une structure plane escamotable (SPE) selon l'une des revendications précédentes, montée fixement sur un élément de support (SUP) dudit satellite, en base d'au moins une partie desdits ensembles de tiges, par l'intermédiaire d'articulations munies de moyens de déploiement.

9. Satellite selon la revendication 8, dans lequel un ensemble (E1, E2, ..., EK, ... , EN, EI1, EI2, ..., EIK, ... , EIN) de tiges de ladite structure (SPE), lorsque celle-ci est repliée, est sensiblement perpendiculaire à la surface dudit élément de support (SUP).
